(19) **Europäisches Patentamt**
**European Patent Office**
**Office européen des brevets**

(11) **EP 4 195 547 B1**

(12) **EUROPEAN PATENT SPECIFICATION**

(45) Date of publication and mention
of the grant of the patent:
**10.09.2025  Bulletin 2025/37**

(51) International Patent Classification (IPC):
**H04L 1/00** *(2006.01)*

(52) Cooperative Patent Classification (CPC):
**H04L 1/0076**

(21) Application number: **22198026.1**

(22) Date of filing: **27.09.2022**

(54) **ULTRA-HIGH RELIABLE WI-FI WITH NETWORK CODING**

ULTRAHOCHZUVERLÄSSIGE WI-FI MIT NETZWERKCODIERUNG

WI-FI À TRÈS HAUTE FIABILITÉ AVEC CODAGE DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2021  US 202163287912 P**

(43) Date of publication of application:
**14.06.2023  Bulletin 2023/24**

(73) Proprietor: **INTEL Corporation
Santa Clara, CA 95054 (US)**

(72) Inventors:
• **PARK, Minyoung
San Ramon, 94582 (US)**
• **NIKOPOUR, Hosein
San Jose (US)**
• **MAO, Wei
San Jose (US)**

(74) Representative: **Viering, Jentschura & Partner
mbB
Patent- und Rechtsanwälte
Am Brauhaus 8
01099 Dresden (DE)**

(56) References cited:
WO-A1-2011/071472       WO-A1-2021/237398
US-A1- 2021 120 478       US-A1- 2021 127 296

• **CHEN LI ET AL: "Promenade: Proportionally Fair
Multipath Rate Control in Datacenter Networks
with Random Network Coding", IEEE
TRANSACTIONS ON PARALLEL AND
DISTRIBUTED SYSTEMS, IEEE, USA, vol. 30, no.
11, 1 November 2019 (2019-11-01), pages 2536 -
2546, XP011749890, ISSN: 1045-9219, [retrieved
on 20191009], DOI: 10.1109/TPDS.2019.2915638**
• **BEHNKE DANIEL ET AL: "ScalaNC - Scalable
heterogeneous link aggregation enabled by
Network Coding", 2017 IEEE 13TH
INTERNATIONAL CONFERENCE ON WIRELESS
AND MOBILE COMPUTING, NETWORKING AND
COMMUNICATIONS (WIMOB), IEEE, 9 October
2017 (2017-10-09), pages 241 - 248,
XP033261443, DOI: 10.1109/
WIMOB.2017.8115845**

EP 4 195 547 B1

## Description

### TECHNICAL FIELD

This disclosure generally relates to systems and methods for wireless communications and, more particularly, to ultra-high reliable Wi-Fi with network coding.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

Document WO2011/071472A1 discloses a method comprising: receiving content; applying fountain codes to symbols of said content to generate fountain encoded symbols at one of a transport layer and an application layer; and transmitting said generated fountain encoded symbols via a mobile network that uses a multi-link delivery system. In one embodiment, said method further comprises: receiving feedback; determining if content was decoded and recovered responsive to said received feedback; and determining if a timer for transmitting said generated fountain encoded symbols has expired.

### BRIEF DESCRIPTION OF THE DRAWINGS

FIG. 1 is a network diagram illustrating an example network environment for Wi-Fi with network coding, in accordance with one or more example embodiments of the present disclosure.

FIG. 2 illustrates a flow diagram of illustrative process for an illustrative Wi-Fi with network coding system, in accordance with one or more example embodiments of the present disclosure.

FIG. 3 illustrates a functional diagram of an exemplary communication station that may be suitable for use as a user device, in accordance with one or more example embodiments of the present disclosure.

FIG. 4 illustrates a block diagram of an example machine upon which any of one or more techniques (e.g., methods) may be performed, in accordance with one or more example embodiments of the present disclosure.

FIG. 5 is a block diagram of a radio architecture in accordance with some examples.

FIG. 6 illustrates an example front-end module circuitry for use in the radio architecture of FIG. 5, in accordance with one or more example embodiments of the present disclosure.

FIG. 7 illustrates an example radio IC circuitry for use in the radio architecture of FIG. 5, in accordance with one or more example embodiments of the present disclosure.

FIG. 8 illustrates an example baseband processing circuitry for use in the radio architecture of FIG. 5, in accordance with one or more example embodiments of the present disclosure.

FIG. 9 depicts an example flow diagram illustrating a retransmission technique for Wi-Fi networks, which does not fall within the scope of the claims.

FIG. 10 depicts an example flow diagram illustrating a duplicate packet transmission (repetition) technique for Wi-Fi networks, which does not fall within the scope of the claims.

FIG. 11 depicts an example flow diagram illustrating Wi-Fi with network coding for two data packets, in accordance with one or more example embodiments of the present invention.

FIG. 12 depicts a diagram illustrating plots showing performance of network coding for various coding group size, in accordance with one or more example embodiments of the present disclosure.

FIG. 13 depicts an example flow diagram illustrating Wi-Fi with network coding without a retransmission, in accordance with one or more example embodiments of the present invention.

FIGS. 14A-14C depict examples of flow diagrams comparing the reliability and efficiency of single link, Wi-Fi multilink operation with repetition, and Wi-Fi multilink operation with network coding, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. The invention concerns only the embodiments that fall within the scope of the claims.

Today more and more wireless applications require high reliability and low latency. Presently, a Wireless Local Area Network (e.g., Wi-Fi), however, relies on retransmissions or duplicate transmissions for reliable data delivery.

The reliance on retransmissions or duplicate transmissions to support a very high reliability, such as $10^{-6}$ packet error rate (PER), may not be suitable. For example, relying on the retransmission scheme could end up adding too much latency for the packet delivery and using the duplicate transmissions could end up lowering the efficiency of the network significantly.

Example embodiments of the present disclosure relate to systems, methods, and devices for ultra-high reliable Wi-Fi with network coding.

In one embodiment, a Wi-Fi with network coding system may use a network coding technique for Wi-Fi to achieve very high reliability (e.g. packet error rate of $10^{-6}$) without increasing latency, in a spectrally efficient manner.

Use a network coding technique to the Aggregated-MAC protocol data unit (A-MPDU) structure of IEEE 802.11.

Use a network coding technique to the multi-link operation (MLO) of IEEE 802.11be.

This disclosure provides very high reliability (e.g. packet error ratio (PER) of $10^{-6}$) for wireless links using Wi-Fi according to IEEE 802.11 that could enable much better user experience for augmented reality (AR)/virtual reality (VR) and other new wireless applications.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

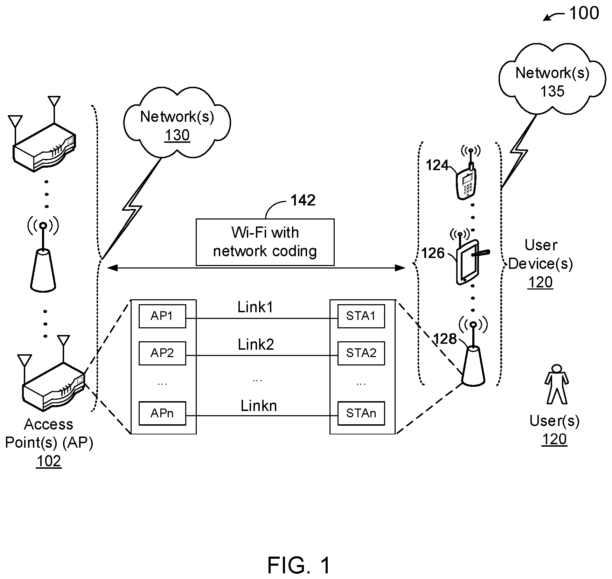

FIG. 1 is a network diagram illustrating an example network environment of Wi-Fi with network coding, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

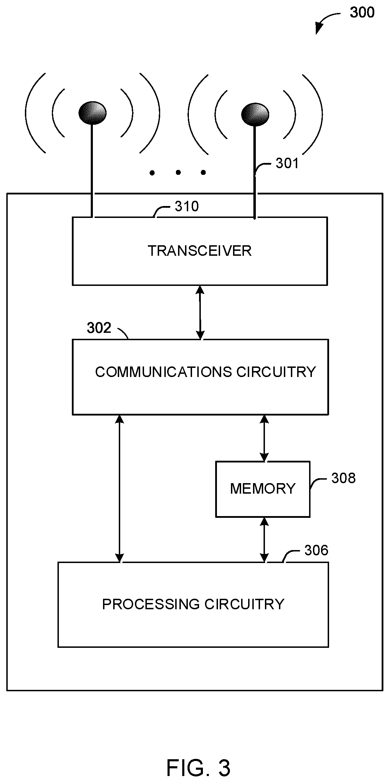

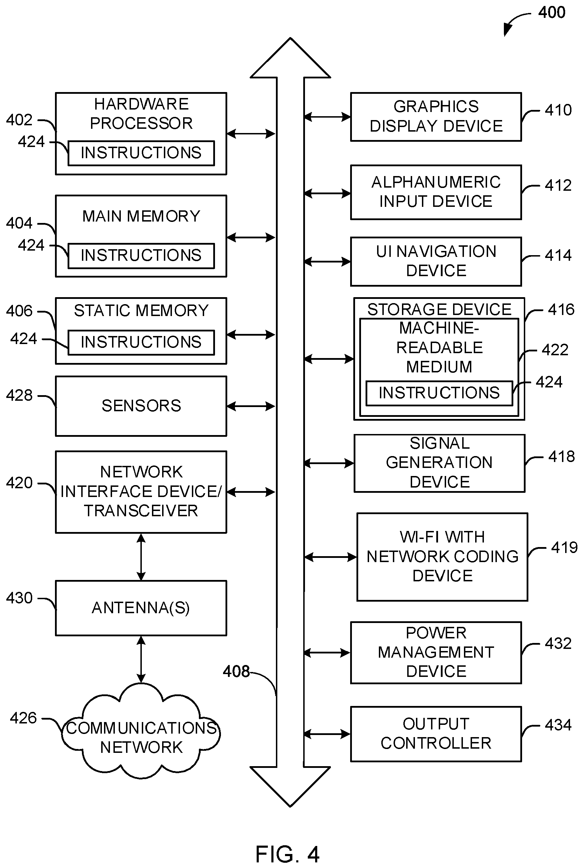

In some embodiments, the user devices 120 and the AP 102 may include one or more computer systems similar to that of the functional diagram of FIG. 3 and/or the example machine/system of FIG. 4.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook™ computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a dynamic availability window 142 with one or more user devices 120. It is understood that the above descriptions are for purposes of illustration and are not meant to be limiting.

It is understood that the above descriptions are for purposes of illustration and are not meant to be limiting.

The following two examples show the problems of the retransmission and duplicate transmission techniques. These two examples do not fall within the scope of the claims.

Example 1: Retransmission(s) after a packet failure(s):

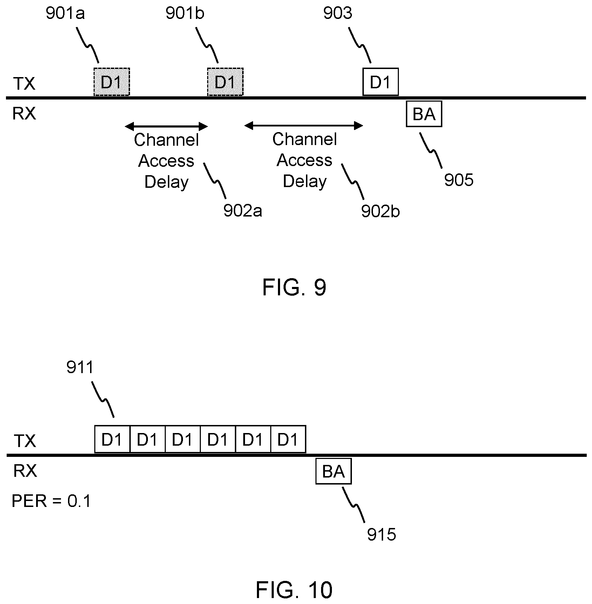

FIG. 9 depicts an example flow diagram illustrating a retransmission technique for Wi-Fi networks. Referring to FIG. 9, when a transmitted data packet (e.g., D1) 901a, 901b is not received correctly at the receiver, the receiver does not respond with an acknowledgement. That is, data packets 901a, 901b may be failure packets (e.g., dropped or corrupted packets). If the transmitter does not receive an acknowledgement within a fixed timeout period, the transmitter retransmits the data packet. For each retransmission, the transmitter must gain channel access by competing with other stations and there could be a few milliseconds of channel access delay 902a, 902b. For a wireless link that has a packet error rate of 0.1, to provide a target packet error rate of $10^{-6}$, there could be six retransmissions and the latency (e.g., which could include six channel access delays) for the successful packet delivery could be very large. When a transmitted data packet 903 is received correctly at the receiver, a block acknowledgment 905 is sent to the transmitter.

Example 2: Duplicate packet transmissions (repetition):

FIG. 10 depicts an example flow diagram illustrating a duplicate packet transmission (repetition) technique for Wi-Fi networks. Referring to FIG. 10, instead of retransmitting data packets, possibly multiple times, when there are packet failures as shown in FIG. 1, a transmitter can transmit multiple duplicated data packets (e.g., D1 repeated 6 times) to provide much higher reliability. For example, for a wireless link with a packet error rate of 0.1, to provide a target packet error rate of $10^{-6}$, the transmitter can transmit six duplicated data packets 911 in an aggregate packet format (e.g. A-MPDU). When any one of the six transmitted data packets is received correctly at the receiver, a block acknowledgment 915 is sent to the transmitter. Although this approach mitigates the latency problem, the spectral efficiency becomes very low.

In one or more embodiments, a Wi-Fi with network coding system may use a network coding technique for Wi-Fi to achieve very high reliability (e.g. packet error rate of $10^{-6}$) without increased latency and in a spectrally efficient manner.

Previous solutions of retransmissions that could cause long latency or duplicate transmissions that decreases spectral efficiency can be avoided.

Wi-Fi with Network Coding (NC)

For example, at the transmitter side, the data packets to be transmitted may be encoded using a network code and the encoded packets may be transmitted instead or in addition to the data packets. At the receiver side, the correctly received encoded packets may be decoded to generate the data packets and/or to recover lost data packets (e.g., data packets that were not received or were corrupted). "Network codes" may include linear packet erasure codes and forward error correction codes.

Encoding: generate a system of linear equations

For example, a network code may be defined as in Eq. 1.

$$\text{Encoding}: R_j = \sum_{i=1}^{k} c_{ij} P_i, \quad c_{ij} \in \mathbb{F} \text{ (Eq. 1)}$$

A group of k data packets to be encoded may be defined as input packets: $P_1, P_2, \cdots, P_k$ as column vectors over finite field $\mathbb{F}$, where the coding group size k is an integer greater than 1 (i.e., at least 2). The input packets $P_1, P_2, \cdots, P_k$ may be encoded using matrix C of size k x n, where the encoded group size n is an integer greater than k. Matrix C may be defined based on a linear combination code (e.g., a linear packet erasure code or forward error correction code). The encoding may generate a group of n coded packets. The group of n coded packets may be defined as encoded packets: $R_1, R_2, \cdots, R_n$ as row vectors over the finite field IF. The network code may have a code rate of k/n. For example, the encoded packets may be defined as in Eq. 2 representing a system of linear equations.

$$[R_1, R_2, \cdots, R_n] = [P_1, P_2, \cdots, P_k][c_{ij}]_{k \times n} \text{--- (Eq. 2)}$$

Decoding: solve the system of linear equations (e.g., same as the one generated at the transmitter side)

All input packets $[P_1, P_2, \cdots, P_k]$ from a transmitter may be recovered at a receiver if the number of packets correctly received at the receiver is at least the number of input packets (e.g., $\geq k$). That is, if a sufficient number of packets are correctly received at the receiver, the receiver can use the correctly received packets to obtain or recover the input packets. For example, the receiver also knows the system of linear equations corresponding to the encoded packets. That is, the receiver knows the matrix C used to generate the system of linear equations representing the encoded packets. At the receiver side, the correctly received packets may be used to solve the system of linear equations to recover the input packets.

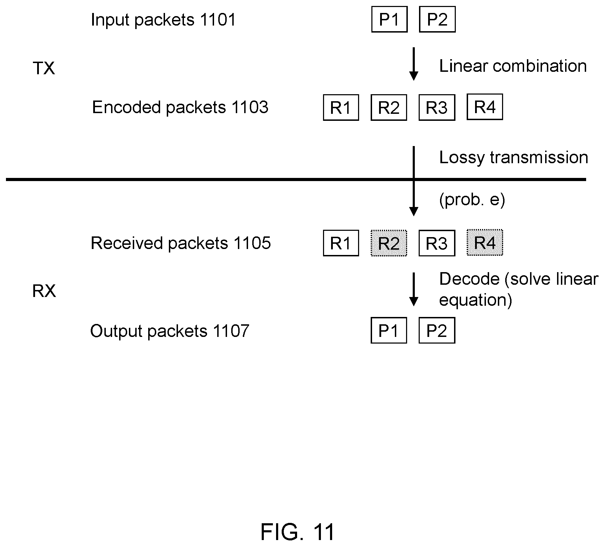

FIG. 11 depicts an example flow diagram illustrating Wi-Fi with network coding for two data packets, in accordance with one or more example embodiments of the present invention. Referring to FIG 11, at the transmitter, inputs packets $P_1, P_2$ may be encoded as encoded packets $R_1, R_2, R_3, R_4$. Each encoded packet is a linear combination of one or more of the input packets $P_1, P_2$ based on matrix C of size 2 x 4. Thus, a system of linear equations may be generated according to Eq. 2. The encoded packets $R_1, R_2, R_3, R_4$ may be transmitted.

Referring to FIG. 11, at the receiver, if at least two of the encoded packets $R_1, R_2, R_3, R_4$ is correctly received, the correctly received encoded packets may be decoded (i.e., used to solve a system of linear equations generated based on matrix C) to recover inputs packets $P_1, P_2$. That is, all k input packets may be recovered if at least k encoded packets are received. For example, referring to FIG. 11, even if encoded packets $R_2, R_4$ are dropped, there is enough redundant information in the system of linear equations so that the input packets $P_1, P_2$ may be recovered from $R_1, R_3$ by solving the system of linear equations related to $R_1, R_3$. Under Wi-Fi with network coding, lossy transmission may be easily simulated. For example, packet loss may be simulated by deleting (zeroing out) one or more columns of matrix C, $[c_{ij}]$. According to Eq. 2, each of $R_1, R_3$ is a linear combination of the input packets $P_1, P_2$. Accordingly, there is a system of two linear equations associated with $R_1, R_3$, so with $R_1, R_3$ known (i.e., correctly received) the two linear equations can be solved to recover the two unknowns elements, i.e., $P_1, P_2$.

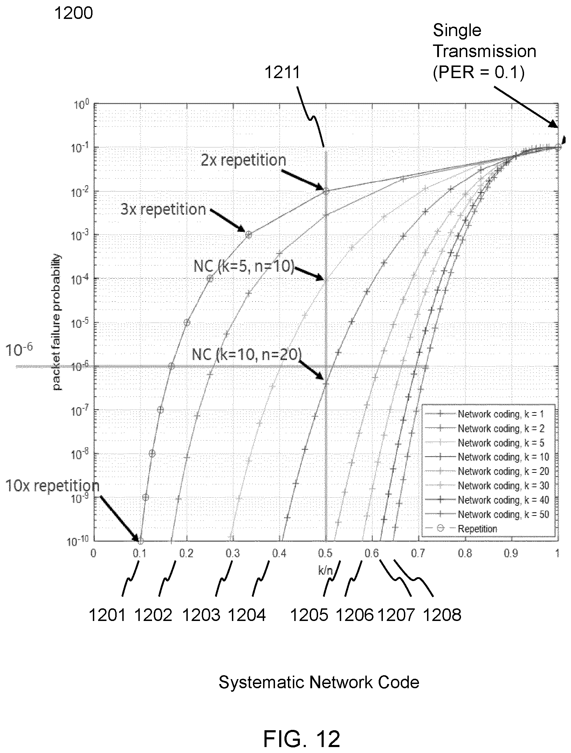

Network coding provides much better Rate-Reliability trade-off than repetition, and this trade-off improves with increasing coding group size (k). FIG. 12 depicts a diagram illustrating plots showing performance of network coding for various coding group sizes, in accordance with one or more example embodiments of the present disclosure. The vertical axis corresponds to packet failure probability in the range $10^{-10}$ to $10^0$ (indicating packet error rate). The horizontal axis corresponds to the code rate in the range 0 to 1 (indicating spectral efficiency). In particular, the plot 1200 of FIG. 12 compares the packet error rate vs. spectral efficiency for network coding for various coding group sizes (k=2, k=5, k=10, k=20, k=30, k=40, k=50) corresponding respectively to curves 1202-1208, assuming single packet transmission error happens with probability 0.1 and assuming that a systematic code is used. The packet error rate vs. spectral efficiency for the repetition technique shown in curve 1201 (k = 1) is also provided as a base of comparison. For example, referring to line 1211 which indicates a coding rate (or spectral efficiency) of 0.5, the PER for the repetition technique is only $10^{-2}$ (see curve 1201), the PER for network coding for a coding group size of 2 is 8 x $10^{-2}$, the PER for network coding for a coding group size of 5 is $10^{-4}$, the PER for network coding for a coding group size of 10 is 6 x $10^{-6}$, etc. The spectral efficiency increases as the coding group size increases.

Network coding may be applied to an aggregated MAC protocol data unit (A-MPDU) frame in Wi-Fi under IEEE 802.11.

Encoding process at a transmitter:

A network code encodes k input data blocks (e.g., input packets $P_1, P_2, \cdots, P_k$) into n network coded data (e.g., encoded packets $R_1, R_2, \cdots, R_n$). The input packets may be k blocks of MAC service data units (MSDUs). There are k equal size blocks (MSDUs), where each block is m bits. Padding bits could be added to make equal size blocks.

A network coding with a code rate of k/n may be used to encode k MSDUs (e.g., input packets $P_1, P_2, \cdots, P_k$) into n network coded blocks (e.g., encoded packets $R_1, R_2, \cdots, R_n$) using Equation (2). The network coding can be either a non-systematic or systematic network code. A systematic network code concatenates (k) input data blocks with the (n-k) network coded data blocks. That is, when using a systematic network code, the transmitter may transmit n blocks including k data blocks (e.g., input packets $P_1, P_2, \cdots, P_k$) and n-k network coded blocks (e.g., encoded packets $R_1, R_2, \cdots, R_{n-k}$). The

remaining k network coded data blocks (e.g., encoded packets $R_{n-k+1}$, $\cdots$ , $R_n$) may be reserved for subsequent transmission as discussed below. A non-systematic network code does not concatenate the input data blocks (e.g., input packets $P_1$, $P_2$ ,$\cdots$ , $P_k$) and only n network coded data (e.g., encoded packets $R_1$, $R_2$, $\cdots$ , $R_n$) may be transmitted. That is, when using a non-systematic network code, the transmitter may transmit n blocks including n network coded data blocks (e.g., encoded packets $R_1$, $R_2$, $\cdots$ , $R_n$) excluding any input data blocks (e.g., input packets $P_1$, $P_2$ ,$\cdots$ , $P_k$).

Each of the n transmitted blocks (e.g., data and network coded blocks or only network coded blocks) is an A-MPDU subframe of an A-MPDU frame. That is, when using a systematic network code, k A-MPDU subframes may include the k blocks of MSDUs, respectively, and n-k A-MPDU subframes may include n-k network coded blocks, respectively. When using a non-systematic code, n A-MPDU subframes may include the n network coded blocks, respectively.

The coding coefficients (e.g., coefficients of matrix C) can come from any linear code with good performance, e.g., with maximum distance separable (MDS) property.

Decoding process at a receiver:

When an A-MPDU frame that is encoded in a network coding is received, the A-MPDU subframes are stored at the receiver. When an MPDU in an A-MPDU subframe doesn't pass a frame check sequence (FCS) (i.e. CRC check), the receiver may recover the MPDU by solving the system of linear equations in Equation 2 using correctly received A-MPDU subframes. If there are at least k A-MPDU subframes received correctly out of the n A-MPDU subframes of the A-MPDU frame, all k MSDUs can be recovered. If a number of A-MPDU subframes that are received correctly, denoted as integer s, is less than k, the receiver may transmit a shorter BlockAck frame that simply contains the additional number of network coded blocks needed to solve the system of linear equations of Equation 2 to recover the missing MSDUs. Although the additional number of network coded blocks needed may be an integer larger than or equal to (k-s), this integer number can still be indicated in a single octet. The current 8/32/64/128 octet BlockAck Bitmap subfield in the BlockAck frame could be replaced with a single octet subfield that indicates the number of additional network coded blocks for retransmission. Thus, according to the embodiments of the present disclosure, a bitmap identifying the position of the missing blocks is unnecessary and the block acknowledgment frame can be only one octet.

Retransmission (e.g., second transmission) at the transmitter:

Upon receiving the new BlockAck frame, the transmitter may encode an extra number of new network coded blocks (e.g., k-s) and send them as subframes of A-MPDU. Alternatively, these additional network coded blocks can be pre-encoded when generating the blocks for the original transmission. For example, when using a systematic network code, the transmitter may generate n network coded blocks (e.g., encoded packets $R_1$, $R_2$, $\cdots$ , $R_n$) using Equation 2 but transmit (n) blocks including (k) data blocks (e.g., input packets $P_1$, $P_2$ ,$\cdots$ , $P_k$) and (n-k) network coded data blocks (e.g., encoded packets $R_1$, $R_2$, $\cdots$ , $R_{n-k}$ ). The remaining {k} network coded data blocks (e.g., encoded packets $R_{n-k+1}$, $\cdots$ , $R_n$) may be reserved for a second transmission. When the transmitter receives a BlockAck frame indicating (k-s) the number of additional network coded blocks needed, where the number of correctly received packets (s) is less than k, the transmitter may send (k-s) of the remaining (k) network coded data blocks as A-MPDU subframes. For another example, when using a systematic network code, the transmitter may generate n network coded blocks (e.g., encoded packets $R_1$, $R_2$, $\cdots$ , $R_n$) using Equation 2 but transmit (m) blocks, (m < n), including k data blocks (e.g., input packets $P_1$, $P_2$, $\cdots$ , $P_k$) and (m-k) network coded data blocks (e.g., encoded packets $R_1$, $R_2$, $\cdots$ , $R_{m-k}$). The remaining (n-m) network coded data blocks (e.g., encoded packets $R_{m-k+1}$, $\cdots$ , $R_n$) may be reserved for a second transmission. When the transmitter receives a BlockAck frame indicating (k-s) the number of additional network coded blocks needed, where the number of correctly received packets (s) is less than k, the transmitter may send (k-s) of the remaining (n-m) network coded data blocks as A-MPDU subframes.

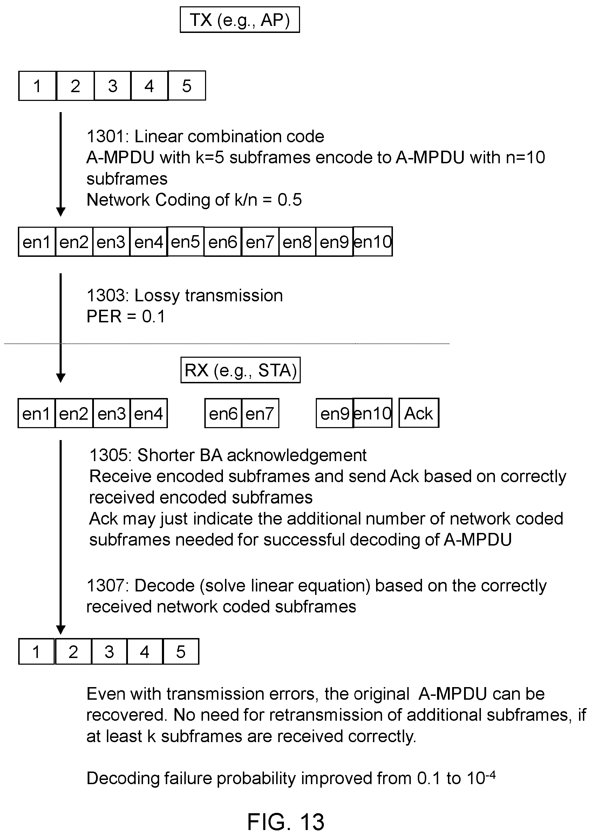

FIG. 13 depicts an example flow diagram illustrating Wi-Fi with network coding without a retransmission, in accordance with one or more example embodiments of the present disclosure. Referring to FIG. 13, at 1301, the transmitter (e.g., AP or STA) applies a network coding with a code rate of 0.5, with k = 5 and n = 10. An A-MPDU with a group coding size of 5 subframes is encoded to an A-MPDU with 10 subframes. The network code may be a systematic code or a non-systematic code. At 1303, the transmitter transmits the 10 encoded subframes over a channel having 0.1 PER. At 1305, the receiver (e.g., STA or AP) receives 8 of the encoded subframes correctly. The STA may indicate (e.g, send) in a shortened BlockAck frame that the additional number of network code subframes needed for successful decoding is 0, since the number of correctly received encoded subframes s is greater than or equal to the group coding size (s>=k) (e.g., 8 >= 5). At 1307, the receiver (e.g. STA) may obtain or recover the 5 original A-MPDU subframes by using the 8 correctly received encoded A-MPDU subframes to solve the system of linear equations (e.g., Eq. 2) associated with the 8 correctly received encoded A-MPDU subframes to generate the 5 original A-MPDU subframes and a second transmission is not needed at the transmitter. The decoding failure probability is improved from 0.1 to $10^{-4}$.

Example of applying network coding to A-MPDU in multilink Wi-Fi

Encoding process at a transmitter of a multilink device (MLD):

An MLD transmitter may similarly encode k MSDUs into n network coded blocks as described in the encoding process above with respect to single link operation. If there are L links available for transmission, the MLD may generate an A-MPDU frame on an l-th link that contains $n_l$ A-MPDU subframes, where each of the $n_l$ A-MPDU subframes contains a network coded block, and the sum of $n_l$ across all L links is n. That is, the n network code blocks (e.g., A-MPDU subframes) may be distributed across L available links of the MLD device.

Decoding process at a receiver:

An MLD receiver may receive an A-MPDU frame on the l-th link that contains a subset of network coded blocks $n_l$. The MLD receiver stores the A-MPDU frame received for each l-th link. When an MPDU in an A-MPDU subframe doesn't pass FCS check, the MLD receiver may be able to recover the MPDU by solving the linear equation (2) using the other A-MPDU subframes correctly received on the current link and the other links. Recovery is possible, if there are at least k A-MPDU subframes received correctly out of the n A-MPDU subframes of the A-MPDU frames across all L links. In such situation, all k MSDUs can be recovered. However, if a number of A-MPDU subframes that are received correctly across L links, denoted as s, is less than k, the receiver may respond with a shortened BlockAck frame over one or more links that contains information indicating the additional number of network coded blocks needed to recover all k MSDUs, which is larger than or equal to (k-s). The current 8/32/64/128 octet BlockAck Bitmap subfield in the BlockAck frame could be replaced with a single octet or a smaller size subfield that indicates just the number of additional network coded blocks for retransmission.

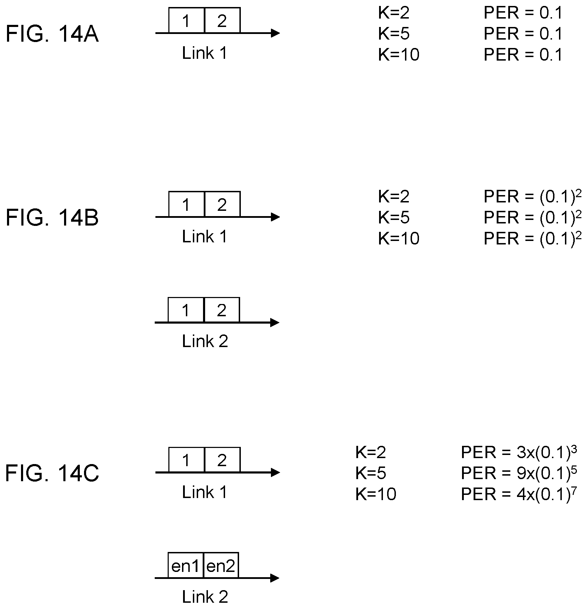

FIGS. 14A-14C depict examples of flow diagrams comparing the reliability and efficiency of single link, Wi-Fi multilink operation with repetition, and Wi-Fi multilink operation with network coding in accordance with one or more example embodiments of the present disclosure.

FIG. 14A illustrates an example of applying single transmission to single link operation in Wi-Fi. The k data blocks are transmitted once on the link. The per-packet reliability remains 0.1. The improvement is not related to the coding group size k.

FIG. 14B illustrates an example of applying the repetition technique to multi-link operation in Wi-Fi. The k data blocks are transmitted on each link. That is, each of the data blocks are duplicated. The per-packet reliability only increases to $0.1^2$. The improvement is not related to the coding group size k.

FIG. 14C illustrates an example of applying network coding to multi-link operation in Wi-Fi (k=2, n=4, systematic code). The k data blocks are transmitted on link 1 and the n-k network coded blocks are transmitted on link 2. The MLD receiver stores all the correctly received blocks and determines, if any, the number of additional blocks needed to recover all A-MPDU subframes. An A-MPDU can be recovered if at least k packets are received correctly. The per-packet reliability increases significantly as the coding group size k increases. For example, PER = $3 \times (0.1)^3$ for k = 2, PER = $9 \times (0.1)^5$ for k = 5, and PER = $4 \times (0.1)^7$ for k = 10.

It is understood that the above descriptions are for purposes of illustration and are not meant to be limiting.

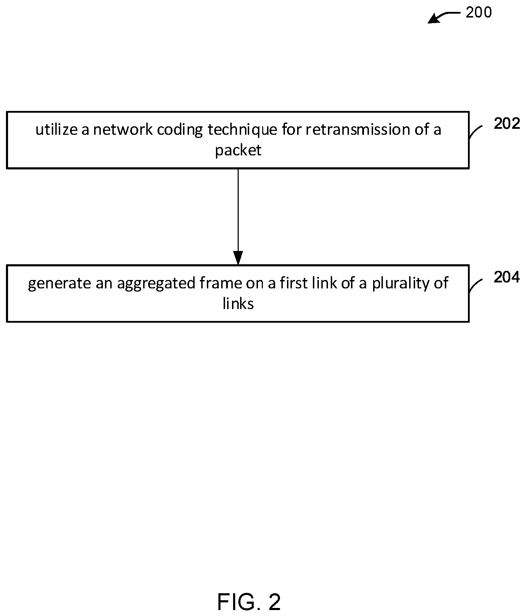

FIG. 2 illustrates a flow diagram of illustrative process 200 for a Wi-Fi with network coding system, in accordance with one or more example embodiments of the present disclosure.

At block 202, a device (e.g., the user device(s) 120 and/or the AP 102 of FIG. 1 and/or the Wi-Fi with network coding device 419 of FIG. 4) may utilize a network coding technique for retransmission of a packet.

At block 204, the device may generate an aggregated frame on a first link of a plurality of links.

It is understood that the above descriptions are for purposes of illustration and are not meant to be limiting.

FIG. 3 shows a functional diagram of an exemplary communication station 300, in accordance with one or more example embodiments of the present disclosure. In one embodiment, FIG. 3 illustrates a functional block diagram of a communication station that may be suitable for use as an AP 102 (FIG. 1) or a user device 120 (FIG. 1) in accordance with some embodiments. The communication station 300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 300 may include communications circuitry 302 and a transceiver 310 for transmitting and receiving signals to and from other communication stations using one or more antennas 301. The communications circuitry 302 may include circuitry that can operate the physical layer (PHY) communications and/or medium access control (MAC) communications for controlling access to the wireless medium, and/or any other communications layers for transmitting and receiving signals. The communication station 300 may also include processing circuitry 306 and memory 308 arranged to perform the operations described herein. In some embodiments, the communications circuitry 302 and the processing circuitry 306 may be configured to perform operations detailed in the above figures, diagrams, and flows.

In accordance with some embodiments, the communications circuitry 302 may be arranged to contend for a wireless medium and configure frames or packets for communicating over the wireless medium. The communications circuitry 302 may be arranged to transmit and receive signals. The communications circuitry 302 may also include circuitry for modulation/demodulation, upconversion/downconversion, filtering, amplification, etc. In some embodiments, the processing circuitry 306 of the communication station 300 may include one or more processors. In other embodiments, two or more antennas 301 may be coupled to the communications circuitry 302 arranged for sending and receiving signals. The memory 308 may store information for configuring the processing circuitry 306 to perform operations for configuring and transmitting message frames and performing the various operations described herein. The memory 308 may include any type of memory, including non-transitory memory, for storing information in a form readable by a machine (e.g., a computer). For example, the memory 308 may include a computer-readable storage device, read-only memory (ROM), random-access memory (RAM), magnetic disk storage media, optical storage media, flash-memory devices and other storage devices and media.

In some embodiments, the communication station 300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 300 may include one or more antennas 301. The antennas 301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 300 may include one or more of a keyboard, a display, a non-volatile memory port, multiple antennas, a graphics processor, an application processor, speakers, and other mobile device elements. The display may be an LCD screen including a touch screen.

Although the communication station 300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 300 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 300 may include one or more processors and may be configured with instructions stored on a computer-readable storage device.

FIG. 4 illustrates a block diagram of an example of a machine 400 or system upon which any one or more of the techniques (e.g., methodologies) discussed herein may be performed. In other embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environments. The machine 400 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a power management device 432, a graphics display device 410, an alphanumeric input device 412 (e.g., a keyboard), and a user interface (UI) navigation device 414 (e.g., a mouse). In an example, the graphics display device 410, alphanumeric input device 412, and UI navigation device 414 may be a touch screen display. The machine 400 may additionally include a storage device (i.e., drive unit) 416, a signal generation device 418 (e.g., a speaker), a Wi-Fi with network coding device 419, a network interface device/transceiver 420 coupled to antenna(s) 430, and one or more sensors 428, such as a global positioning system (GPS) sensor, a compass, an accelerometer, or other sensor. The machine 400 may include an output controller 434, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 402 for generation and processing of the baseband signals and for controlling operations of the main memory 404, the storage device 416, and/or the Wi-Fi with network coding device 419. The baseband processor may be provided on a single radio card, a single chip, or an integrated circuit (IC).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within the static memory 406, or within the hardware processor 402 during execution thereof by the machine 400. In an example, one or any combination of the hardware processor 402, the main memory 404, the static memory 406, or the storage device 416 may constitute machine-readable media.

The Wi-Fi with network coding device 419 may carry out or perform any of the operations and processes (e.g., process 200) described and shown above.

It is understood that the above are only a subset of what the Wi-Fi with network coding device 419 may be configured to perform and that other functions included throughout this disclosure may also be performed by the Wi-Fi with network coding device 419.

While the machine-readable medium 422 is illustrated as a single medium, the term "machine-readable medium" may include a single medium or multiple media (e.g., a centralized or distributed database, and/or associated caches and servers) configured to store the one or more instructions 424.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 400 and that cause the machine 400 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 424 may further be transmitted or received over a communications network 426 using a transmission medium via the network interface device/transceiver 420 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, and peer-to-peer (P2P) networks, among others. In an example, the network interface device/transceiver 420 may include one or more physical jacks (e.g., Ethernet, coaxial, or phone jacks) or one or more antennas to connect to the communications network 426. In an example, the network interface device/transceiver 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

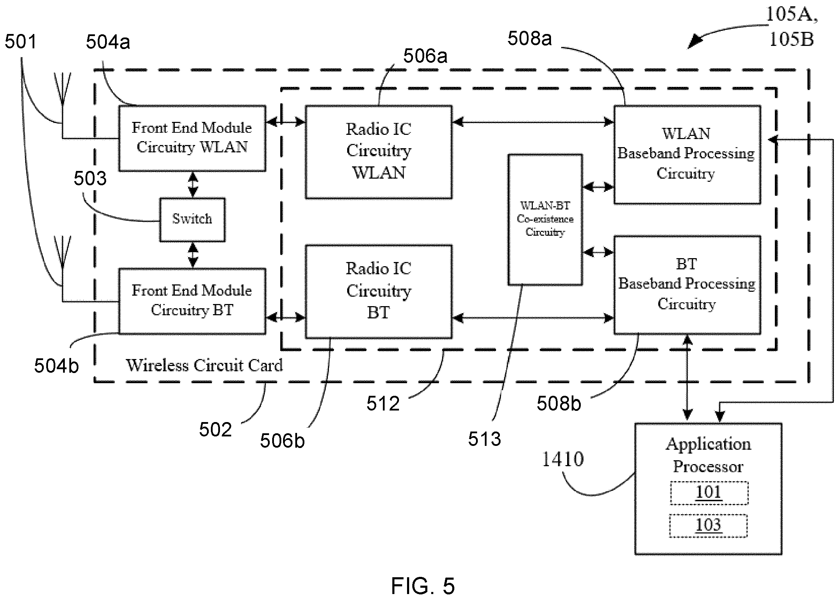

FIG. 5 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 504a-b, radio IC circuitry 506a-b and baseband processing circuitry 508a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 504a-b may include a WLAN or Wi-Fi FEM circuitry 504a and a Bluetooth (BT) FEM circuitry 504b. The WLAN FEM circuitry 504a may include a receive signal path comprising circuitry configured to operate on WLAN RF signals received from one or more antennas 501, to amplify the received signals and to provide the amplified versions of the received signals to the WLAN radio IC circuitry 506a for further processing. The BT FEM circuitry 504b may include a receive signal path which may include circuitry configured to operate on BT RF signals received from one or more antennas 501, to amplify the received signals and to provide the amplified versions of the received signals to the BT radio IC circuitry 506b for further processing. FEM circuitry 504a may also include a transmit signal path which may include circuitry configured to amplify WLAN signals provided by the radio IC circuitry 506a for wireless transmission by one or more of the antennas 501. In addition, FEM circuitry 504b may also include a transmit signal path which may include circuitry configured to amplify BT signals provided by the radio IC circuitry 506b for wireless transmission by the one or more antennas. In the embodiment of FIG. 5, although FEM 504a and FEM 504b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 506a-b as shown may include WLAN radio IC circuitry 506a and BT radio IC circuitry 506b. The WLAN radio IC circuitry 506a may include a receive signal path which may include circuitry to down-convert WLAN RF signals received from the FEM circuitry 504a and provide baseband signals to WLAN baseband processing circuitry 508a. BT radio IC circuitry 506b may in turn include a receive signal path which may include circuitry to down-convert BT RF signals received from the FEM circuitry 504b and provide baseband signals to BT baseband processing circuitry 508b. WLAN radio IC circuitry 506a may also include a transmit signal path which may include circuitry to up-convert WLAN baseband signals provided by the WLAN baseband processing circuitry 508a and provide WLAN RF output signals to the FEM circuitry 504a for subsequent wireless transmission by the one or more antennas 501. BT radio IC circuitry 506b may also include a transmit signal path which may include circuitry to up-convert BT baseband signals provided by the BT baseband processing circuitry 508b and provide BT RF output signals to the FEM circuitry 504b for subsequent wireless transmission by the one or more antennas 501. In the embodiment of FIG. 5, although radio IC circuitries 506a and 506b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 508a-b may include a WLAN baseband processing circuitry 508a and a BT baseband processing circuitry 508b. The WLAN baseband processing circuitry 508a may include a memory, such as, for example, a set of RAM arrays in a Fast Fourier Transform or Inverse Fast Fourier Transform block (not shown) of the WLAN baseband processing circuitry 508a. Each of the WLAN baseband circuitry 508a and the BT baseband circuitry 508b may further include one or more processors and control logic to process the signals received from the corresponding WLAN or BT receive signal path of the radio IC circuitry 506a-b, and to also generate corresponding WLAN or BT baseband signals for the transmit signal path of the radio IC circuitry 506a-b. Each of the baseband processing circuitries 508a and 508b may further include physical layer (PHY) and medium access control layer (MAC) circuitry, and may further interface with a device for generation and processing of the baseband signals and for controlling operations of the radio IC circuitry 506a-b.

Referring still to FIG. 5, according to the shown embodiment, WLAN-BT coexistence circuitry 513 may include logic providing an interface between the WLAN baseband circuitry 508a and the BT baseband circuitry 508b to enable use cases requiring WLAN and BT coexistence. In addition, a switch 503 may be provided between the WLAN FEM circuitry 504a and the BT FEM circuitry 504b to allow switching between the WLAN and BT radios according to application needs. In addition, although the antennas 501 are depicted as being respectively connected to the WLAN FEM circuitry 504a and the BT FEM circuitry 504b, embodiments include within their scope the sharing of one or more antennas as between the WLAN and BT FEMs, or the provision of more than one antenna connected to each of FEM 504a or 504b.

In some embodiments, the front-end module circuitry 504a-b, the radio IC circuitry 506a-b, and baseband processing circuitry 508a-b may be provided on a single radio card, such as wireless radio card 502. In some other embodiments, the one or more antennas 501, the FEM circuitry 504a-b and the radio IC circuitry 506a-b may be provided on a single radio card. In some other embodiments, the radio IC circuitry 506a-b and the baseband processing circuitry 508a-b may be provided on a single chip or integrated circuit (IC), such as IC 512.

In some embodiments, the wireless radio card 502 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

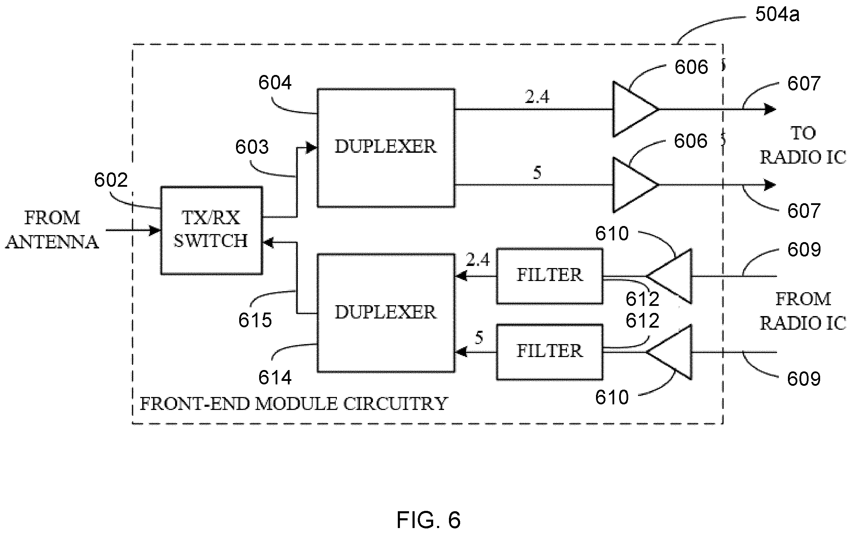

In some embodiments, as further shown in FIG. 6, the BT baseband circuitry 508b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 6 illustrates WLAN FEM circuitry 504a in accordance with some embodiments. Although the example of FIG. 6 is described in conjunction with the WLAN FEM circuitry 504a, the example of FIG. 6 may be described in conjunction with the example BT FEM circuitry 504b (FIG. 5), although other circuitry configurations may also be suitable.

In some embodiments, the FEM circuitry 504a may include a TX/RX switch 602 to switch between transmit mode and receive mode operation. The FEM circuitry 504a may include a receive signal path and a transmit signal path. The receive signal path of the FEM circuitry 504a may include a low-noise amplifier (LNA) 606 to amplify received RF signals 603 and provide the amplified received RF signals 607 as an output (e.g., to the radio IC circuitry 506a-b (FIG. 5)). The transmit signal path of the circuitry 504a may include a power amplifier (PA) to amplify input RF signals 609 (e.g., provided by the radio IC circuitry 506a-b), and one or more filters 612, such as band-pass filters (BPFs), low-pass filters (LPFs) or other types of filters, to generate RF signals 615 for subsequent transmission (e.g., by one or more of the antennas 501 (FIG. 5)) via an example duplexer 614.

In some dual-mode embodiments for Wi-Fi communication, the FEM circuitry 504a may be configured to operate in either the 2.4 GHz frequency spectrum or the 5 GHz frequency spectrum. In these embodiments, the receive signal path of the FEM circuitry 504a may include a receive signal path duplexer 604 to separate the signals from each spectrum as well as provide a separate LNA 606 for each spectrum as shown. In these embodiments, the transmit signal path of the FEM circuitry 504a may also include a power amplifier 610 and a filter 612, such as a BPF, an LPF or another type of filter for each frequency spectrum and a transmit signal path duplexer 604 to provide the signals of one of the different spectrums onto a single transmit path for subsequent transmission by the one or more of the antennas 501 (FIG. 5). In some embodiments, BT communications may utilize the 2.4 GHz signal paths and may utilize the same FEM circuitry 504a as the one used for WLAN communications.

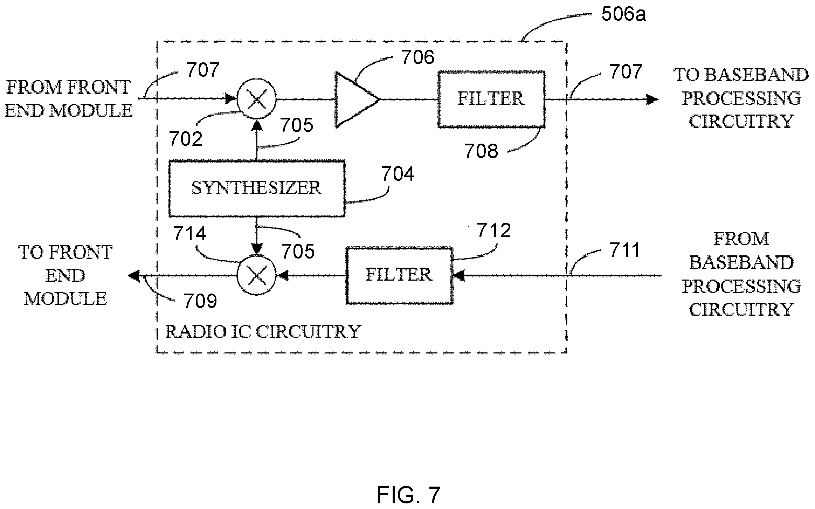

FIG. 7 illustrates radio IC circuitry 506a in accordance with some embodiments. The radio IC circuitry 506a is one example of circuitry that may be suitable for use as the WLAN or BT radio IC circuitry 506a/506b (FIG. 5), although other circuitry configurations may also be suitable. Alternatively, the example of FIG. 7 may be described in conjunction with the example BT radio IC circuitry 506b.

In some embodiments, the radio IC circuitry 506a may include a receive signal path and a transmit signal path. The receive signal path of the radio IC circuitry 506a may include at least mixer circuitry 702, such as, for example, down-conversion mixer circuitry, amplifier circuitry 706 and filter circuitry 708. The transmit signal path of the radio IC circuitry 506a may include at least filter circuitry 712 and mixer circuitry 714, such as, for example, up-conversion mixer circuitry. Radio IC circuitry 506a may also include synthesizer circuitry 704 for synthesizing a frequency 705 for use by the mixer circuitry 702 and the mixer circuitry 714. The mixer circuitry 702 and/or 714 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 7 illustrates only a simplified version of a radio IC circuitry, and may include, although not shown, embodiments where each of the depicted circuitries may include more than one component. For instance, mixer circuitry 714 may each include one or more mixers, and filter circuitries 708 and/or 712 may each include one or more filters, such as one or more BPFs and/or LPFs according to application needs. For example, when mixer circuitries are of the direct-conversion type, they may each include two or more mixers.

In some embodiments, mixer circuitry 702 may be configured to down-convert RF signals 607 received from the FEM circuitry 504a-b (FIG. 5) based on the synthesized frequency 705 provided by synthesizer circuitry 704. The amplifier circuitry 706 may be configured to amplify the down-converted signals and the filter circuitry 708 may include an LPF configured to remove unwanted signals from the down-converted signals to generate output baseband signals 707. Output baseband signals 707 may be provided to the baseband processing circuitry 508a-b (FIG. 5) for further processing. In some embodiments, the output baseband signals 707 may be zero-frequency baseband signals, although this is not a requirement. In some embodiments, mixer circuitry 702 may comprise passive mixers, although the scope of the embodiments is not limited in this respect.

In some embodiments, the mixer circuitry 714 may be configured to up-convert input baseband signals 711 based on the synthesized frequency 705 provided by the synthesizer circuitry 704 to generate RF output signals 609 for the FEM circuitry 504a-b. The baseband signals 711 may be provided by the baseband processing circuitry 508a-b and may be filtered by filter circuitry 712. The filter circuitry 712 may include an LPF or a BPF, although the scope of the embodiments is not limited in this respect.

In some embodiments, the mixer circuitry 702 and the mixer circuitry 714 may each include two or more mixers and may be arranged for quadrature down-conversion and/or up-conversion respectively with the help of synthesizer 704. In some embodiments, the mixer circuitry 702 and the mixer circuitry 714 may each include two or more mixers each configured for image rejection (e.g., Hartley image rejection). In some embodiments, the mixer circuitry 702 and the mixer circuitry 714 may be arranged for direct down-conversion and/or direct up-conversion, respectively. In some embodiments, the mixer circuitry 702 and the mixer circuitry 714 may be configured for super-heterodyne operation, although this is not a requirement.

Mixer circuitry 702 may comprise, according to one embodiment: quadrature passive mixers (e.g., for the in-phase (I) and quadrature phase (Q) paths). In such an embodiment, RF input signal 607 from FIG. 7 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 705 of synthesizer 704 (FIG. 7). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 607 (FIG. 6) may comprise a balanced signal, although the scope of the embodiments is not limited in this respect. The I and Q baseband output signals may be provided to low-noise amplifier, such as amplifier circuitry 706 (FIG. 7) or to filter circuitry 708 (FIG. 7).

In some embodiments, the output baseband signals 707 and the input baseband signals 711 may be analog baseband signals, although the scope of the embodiments is not limited in this respect. In some alternate embodiments, the output baseband signals 707 and the input baseband signals 711 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 704 may be a fractional-N synthesizer or a fractional N/N+1 synthesizer, although the scope of the embodiments is not limited in this respect as other types of frequency synthesizers may be suitable. For example, synthesizer circuitry 704 may be a delta-sigma synthesizer, a frequency multiplier, or a synthesizer comprising a phase-locked loop with a frequency divider. According to some embodiments, the synthesizer circuitry 704 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 704 may be provided by a voltage controlled oscillator (VCO), although that is not a requirement. A divider control input may further be provided by either the baseband processing circuitry 508a-b (FIG. 5) depending on the desired output frequency 705. In some embodiments, a divider control input (e.g., N) may be determined from a look-up table (e.g., within a Wi-Fi card) based on a channel number and a channel center frequency as determined or indicated by the example application processor 510. The application processor 510 may include, or otherwise be connected to, one of the example secure signal converter 101 or the example received signal converter 103 (e.g., depending on which device the example radio architecture is implemented in).

In some embodiments, synthesizer circuitry 704 may be configured to generate a carrier frequency as the output frequency 705, while in other embodiments, the output frequency 705 may be a fraction of the carrier frequency (e.g., one-half the carrier frequency, one-third the carrier frequency). In some embodiments, the output frequency 705 may be a LO frequency (fLO).

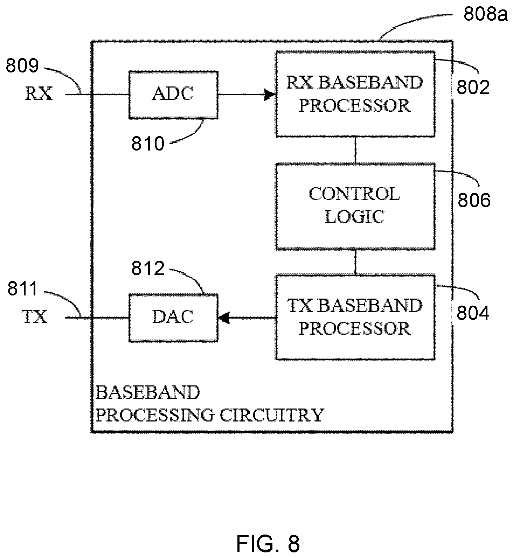

FIG. 8 illustrates a functional block diagram of baseband processing circuitry 508a in accordance with some embodiments. The baseband processing circuitry 508a is one example of circuitry that may be suitable for use as the baseband processing circuitry 508a (FIG. 5), although other circuitry configurations may also be suitable. Alternatively, the example of FIG. 7 may be used to implement the example BT baseband processing circuitry 508b of FIG. 5.

The baseband processing circuitry 508a may include a receive baseband processor (RX BBP) 802 for processing receive baseband signals 709 provided by the radio IC circuitry 506a-b (FIG. 5) and a transmit baseband processor (TX BBP) 804 for generating transmit baseband signals 711 for the radio IC circuitry 506a-b. The baseband processing circuitry 508a may also include control logic 806 for coordinating the operations of the baseband processing circuitry 508a.

In some embodiments (e.g., when analog baseband signals are exchanged between the baseband processing circuitry 508a-b and the radio IC circuitry 506a-b), the baseband processing circuitry 508a may include ADC 810 to convert analog baseband signals 809 received from the radio IC circuitry 506a-b to digital baseband signals for processing by the RX BBP 802. In these embodiments, the baseband processing circuitry 508a may also include DAC 812 to convert digital baseband signals from the TX BBP 804 to analog baseband signals 811.

In some embodiments that communicate OFDM signals or OFDMA signals, such as through baseband processor 508a, the transmit baseband processor 804 may be configured to generate OFDM or OFDMA signals as appropriate for transmission by performing an inverse fast Fourier transform (IFFT). The receive baseband processor 802 may be configured to process received OFDM signals or OFDMA signals by performing an FFT. In some embodiments, the receive baseband processor 802 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 5, in some embodiments, the antennas 501 (FIG. 5) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 501 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth®, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed. Although specific terms are employed herein, they are used in a generic and descriptive sense only and not for purposes of limitation.

**Claims**

1. A device configured for operation in a communication network, the device comprising processing circuitry coupled to storage, the processing circuitry configured to:

   generate a plurality of n network coded blocks based on a plurality of k data blocks, where n and k are integers and n > k > 1 and wherein each network coded block is a linear combination of the plurality of of the k data blocks;
   generate an aggregated frame, each subframe of the aggregated frame including a respective one of the plurality of n network coded blocks or the plurality of k data blocks, wherein each subframe of the aggregated frame includes a verification code;
   cause to send the aggregated frame;
   receive a block acknowledgement frame including information indicating a number of additional network coded blocks needed for successful decoding; and
cause to transmit a second aggregated frame including at least the number of additional network coded blocks.

2. The device of claim 1, wherein the plurality of data blocks comprises k MSDU (media access control service data unit) blocks, wherein the aggregated frame comprises n subframes,

wherein, preferably, the plurality of data blocks are of equal size, and
wherein, preferably, the plurality of network coded blocks are generated based on a linear combination of the plurality of data blocks, and
wherein, preferably, the plurality of network coded blocks are defined as row vectors $[R_1, R_2, \cdots, R_n]$, the plurality of data blocks are defined as column vectors $[P_1, P_2, \cdots, P_k]$, and $[R_1, R_2, \cdots, R_n] = [P_1, P_2, \cdots, P_k]C$ where C is a matrix of size k x n comprising $[c_{ij}]_{k \times n}$ coefficients configured to perform the linear combination, and
wherein, preferably, the code rate is k/n, and
wherein, preferably, the communication network is an IEEE 802.11 wireless network.

3. The device of claim 2, wherein the n subframes of the aggregated frame include at least a subset of the plurality of network coded blocks,

wherein, preferably, the aggregated frame comprises an aggregated MAC protocol data unit (A-MPDU) frame and the n subframes are n A-MPDU subframes, and
wherein, preferably, the n subframes of the aggregated frame comprises k MSDU blocks and n-k network coded blocks, or
wherein, preferably, the n subframes of the aggregated frame comprises n network coded blocks.

4. The device of claim 3, wherein the processing circuitry is further configured to:

receive a block acknowledgment frame including information indicating a number of additional network coded blocks; and
cause to transmit a second aggregated frame including at least the number of additional network coded blocks,
wherein, preferably, each subframe of the second aggregated frame includes a respective one of the additional network coded blocks; and
wherein, preferably, the block acknowledgment frame is one octet, and
wherein, preferably, the additional network coded blocks are pregenerated.

5. The device of claim 4, wherein the device is further configured for multilink operation in a wireless communication network, wherein the processing circuitry is further configured to:

cause to send the subframes of the aggregated frame over multiple links,
wherein, preferably, the wireless communication network is an IEEE 802.11 wireless network.

6. A method for a device configured for operation in a communication network, the method comprising:

generating a plurality of n network coded blocks based on a plurality of k data blocks, where n and k are integers and n > k > 1 and wherein, each network coded block is a linear combination of the k data blocks;
generating an aggregated frame, each subframe of the aggregated frame including a respective one of the plurality of n network coded blocks or the plurality of k data blocks, wherein each subframe of the aggregated frame includes a verification code; and
cause to send the aggregated frame, and
wherein the method further comprises:

receiving a block acknowledgment frame including information indicating a number of additional network coded blocks needed for successful decoding; and
cause to transmit a second aggregated frame including at least the number of additional network coded blocks.

7. A non-transitory computer-readable medium storing computer-executable instructions which when executed by one or more processors of a device configured for operation in a communication network cause the one or more processors of the device to perform the method according to claim 6.

8. A device configured for operation in a communication network, the device comprising processing circuitry coupled to storage, the processing circuitry configured to:

receive an aggregated frame, each subframe of the aggregated frame including a respective one of a plurality of n network coded blocks or a plurality of k data blocks, wherein the plurality of n network coded blocks is generated based on the plurality of n data blocks, wherein k and n are integers and k > n > 1, wherein each network coded block is a linear combination of the plurality of data blocks; and wherein each subframe of the aggregated frame includes a verification code; determine s, the number of correctly received subframes by verifying the verification code of each subframe; and cause to send a block acknowledgment frame including information indicating a number of additional network coded blocks needed for successful decoding.

9. The device of claim 8, wherein the plurality of data blocks comprises k MSDU blocks, wherein the aggregated frame comprises n subframes,

wherein, preferably, the plurality of data blocks are of equal size, and wherein, preferably, the plurality of network coded blocks are generated based on a linear combination of the plurality of data blocks, and wherein, preferably, the plurality of network coded blocks are defined as row vectors $[R_1, R_2, \cdots, R_n]$, the plurality of data blocks are defined as column vectors $[P_1, P_2, \cdots, P_k]$, and $[R_1, R_2, \cdots, R_n] = [P_1, P_2, \cdots, P_k]C$ where C is a matrix of size k x n comprising $[c_{ij}]_{k \times n}$ coefficients configured to perform the linear combination, and wherein, preferably, the code rate is k/n, and wherein, preferably, the communication network is an IEEE 802.11 wireless network.

10. The device of claim 9, wherein the n subframes of the aggregated frame include at least a subset of the plurality of network coded blocks,

wherein, preferably, the aggregated frame comprises an aggregated MAC protocol data unit (A-MPDU) frame and the n subframes are n A-MPDU subframes, and wherein, preferably, the n subframes of the aggregated frame comprises k MSDU blocks and n-k network coded blocks, or wherein, preferably, the n subframes of the aggregated frame comprises n network coded blocks.

11. The device of claim 10, the processing circuitry further configured to:
cause to obtain or generate the k MSDU blocks from the n subframes when s < k by solving a system of linear equations generated based on the plurality of data blocks and the correctly received network coded blocks.

12. The device of claim 10, wherein the information based on the number of correctly received subframes is a number indicating additional network coded blocks needed to recover incorrectly received subframes, and wherein the processing circuitry is further configured to:

receive a second aggregated frame including at least the number of additional network coded blocks, and cause to recover incorrectly received subframes by solving a system of linear equations generated based on the plurality of data blocks and the plurality of correctly received network coded blocks, wherein, preferably, each subframe of the second aggregated frame includes a respective one of the additional network coded blocks.

13. The device of claim 11, wherein the device is further configured for multilink operation in a wireless communication network, wherein the processing circuitry is further configured to:

receive the subframes of the aggregated frame over multiple links, wherein, preferably, the wireless communication network is an IEEE 802.11 network.

14. A method for a device configured for operation in communication network, the method comprising:

receiving an aggregated frame, each subframe of the aggregated frame including a respective one of a plurality of n network coded blocks or k data blocks, wherein the a plurality of n network coded blocks is generated based on the n data blocks, wherein k and n are integers and k > n > 1,

wherein, each network coded block is a linear combination of the k data blocks; and
wherein each subframe of the aggregated frame includes a verification code;
determine s, the number of correctly received subframes by verifying the verification code of each subframe; and
cause to send a block acknowledgment frame including information indicating a number of additional network coded blocks needed for successful decoding.

15. A non-transitory computer-readable medium storing computer-executable instructions which when executed by one or more processors of a device configured for operation in a communication network cause the one or more processors of the device to perform the method according to claim 14.

**Patentansprüche**

1. Vorrichtung, die für Betrieb in einem Kommunikationsnetzwerk konfiguriert ist, wobei die Vorrichtung eine Verarbeitungsschaltungsanordnung umfasst, die mit einem Speicher gekoppelt ist, wobei die Verarbeitungsschaltungsanordnung zu Folgendem konfiguriert ist:

   Erzeugen einer Mehrzahl von n netzwerkcodierten Blöcken basierend auf einer Mehrzahl von k Datenblöcken, wobei n und k ganze Zahlen sind und n > k > 1 und wobei jeder netzwerkcodierte Block eine lineare Kombination der Mehrzahl der k Datenblöcke ist;
   Erzeugen eines aggregierten Rahmens, wobei jeder Unterrahmen des aggregierten Rahmens einen jeweiligen der Mehrzahl von n netzwerkcodierten Blöcken oder der Mehrzahl von k Datenblöcken aufweist, wobei jeder Unterrahmen des aggregierten Rahmens einen Verifizierungscode aufweist;
   Veranlassen des Sendens des aggregierten Rahmens; und
   Empfangen eines Blockbestätigungsrahmens, der Informationen aufweist, die eine Anzahl zusätzlicher netzwerkcodierter Blöcke angeben, die zum erfolgreichen Decodieren benötigt wird; und
   Veranlassen des Übertragens eines zweiten aggregierten Rahmens, der mindestens die Anzahl zusätzlicher netzwerkcodierter Blöcke aufweist.

2. Vorrichtung nach Anspruch 1, wobei die Mehrzahl von Datenblöcken k Media Access Control Service Data Unit-Blöcke (MSDU-Blöcke) umfasst, wobei der aggregierte Rahmen n Unterrahmen umfasst,

   wobei vorzugsweise die Mehrzahl von Datenblöcken eine gleiche Größe aufweist, und
   wobei vorzugsweise die Mehrzahl von netzwerkcodierten Blöcken basierend auf einer linearen Kombination der Mehrzahl von Datenblöcken erzeugt wird, und
   wobei vorzugsweise die Mehrzahl von netzwerkcodierten Blöcken als Zeilenvektoren $[R_1, R_2, ..., R_n]$ definiert ist, die Mehrzahl von Datenblöcken als Spaltenvektoren $[P_1, P_2, ..., P_k]$ definiert ist und $[R_1, R_2, ..., R_n] = [P_1, P_2, ..., P_k]$ C, wobei C eine Matrix der Größe k x n ist, die $[C_{ij}]_{kxn}$ Koeffizienten umfasst, die konfiguriert sind, um die lineare Kombination durchzuführen, und
   wobei vorzugsweise die Coderate k/n ist, und
   wobei das Kommunikationsnetzwerk vorzugsweise ein drahtloses IEEE 802.11-Netzwerk ist.

3. Vorrichtung nach Anspruch 2, wobei die n Unterrahmen des aggregierten Rahmens mindestens eine Teilmenge der Mehrzahl von netzwerkcodierten Blöcken aufweisen,

   wobei vorzugsweise der aggregierte Rahmen einen aggregierten MAC-Protokolldateneinheitsrahmen (A-MPDU-Rahmen) umfasst und die n Unterrahmen n A-MPDU-Unterrahmen sind, und
   wobei vorzugsweise die n Unterrahmen des aggregierten Rahmens k MSDU-Blöcke und n - k netzwerkcodierte Blöcke umfassen, oder
   wobei vorzugsweise die n Unterrahmen des aggregierten Rahmens n netzwerkcodierte Blöcke umfassen.

4. Vorrichtung nach Anspruch 3, wobei die Verarbeitungsschaltungsanordnung ferner zu Folgendem konfiguriert ist:

   Empfangen eines Blockbestätigungsrahmens, der Informationen aufweist, die eine Anzahl zusätzlicher netzwerkcodierter Blöcke angeben; und
   Veranlassen des Übertragens eines zweiten aggregierten Rahmens, der mindestens die Anzahl zusätzlicher netzwerkcodierter Blöcke aufweist,
   wobei vorzugsweise jeder Unterrahmen des zweiten aggregierten Rahmens einen jeweiligen der zusätzlichen netzwerkcodierten Blöcke aufweist; und

wobei vorzugsweise der Blockbestätigungsrahmen ein Oktett ist, und

wobei vorzugsweise die zusätzlichen netzwerkcodierten Blöcke vorab erzeugt werden.

5. Vorrichtung nach Anspruch 4, wobei die Vorrichtung ferner für einen Multilink-Betrieb in einem Drahtloskommunikationsnetzwerk konfiguriert ist, wobei die Verarbeitungsschaltungsanordnung ferner zu Folgendem konfiguriert ist:

Veranlassen des Sendens der Unterrahmen des aggregierten Rahmens über mehrere Links,

wobei das drahtlose Kommunikationsnetzwerk vorzugsweise ein drahtloses IEEE 802.11-Netzwerk ist.

6. Verfahren für eine Vorrichtung, die für Betrieb in einem Kommunikationsnetzwerk konfiguriert ist, wobei das Verfahren Folgendes umfasst:

Erzeugen einer Mehrzahl von n netzwerkcodierten Blöcken basierend auf einer Mehrzahl von k Datenblöcken, wobei n und k ganze Zahlen sind und n > k > 1 und wobei jeder netzwerkcodierte Block eine lineare Kombination der k Datenblöcke ist;

Erzeugen eines aggregierten Rahmens, wobei jeder Unterrahmen des aggregierten Rahmens einen jeweiligen der Mehrzahl von n netzwerkcodierten Blöcken oder der Mehrzahl von k Datenblöcken aufweist, wobei jeder Unterrahmen des aggregierten Rahmens einen Verifizierungscode aufweist; und

Veranlassen des Sendens des aggregierten Rahmens; und

wobei das Verfahren ferner Folgendes umfasst:

Empfangen eines Blockbestätigungsrahmens, der Informationen aufweist, die eine Anzahl zusätzlicher netzwerkcodierter Blöcke angeben, die zum erfolgreichen Decodieren benötigt wird; und

Veranlassen des Übertragens eines zweiten aggregierten Rahmens, der mindestens die Anzahl zusätzlicher netzwerkcodierter Blöcke aufweist.

7. Nichtflüchtiges computerlesbares Medium, das computerausführbare Anweisungen speichert, die bei Ausführung durch einen oder mehrere Prozessoren einer Vorrichtung, die für Betrieb in einem Kommunikationsnetzwerk konfiguriert ist, den einen oder die mehreren Prozessoren der Vorrichtung zum Durchführen des Verfahrens nach Anspruch 6 veranlassen.

8. Vorrichtung, die für Betrieb in einem Kommunikationsnetzwerk konfiguriert ist, wobei die Vorrichtung eine Verarbeitungsschaltungsanordnung umfasst, die mit einem Speicher gekoppelt ist, wobei die Verarbeitungsschaltungsanordnung zu Folgendem konfiguriert ist:

Empfangen eines aggregierten Rahmens, wobei jeder Unterrahmen des aggregierten Rahmens einen jeweiligen einer Mehrzahl von n netzwerkcodierten Blöcken oder einer Mehrzahl von k Datenblöcken aufweist, wobei die Mehrzahl von n netzwerkcodierten Blöcken basierend auf der Mehrzahl von n Datenblöcken erzeugt wird, wobei k und n ganze Zahlen sind und k > n > 1,

wobei jeder netzwerkcodierte Block eine lineare Kombination der Mehrzahl von Datenblöcken ist; und

wobei jeder Unterrahmen des aggregierten Rahmens einen Verifizierungscode aufweist;

Bestimmen von s, der Anzahl korrekt empfangener Unterrahmen, durch Verifizieren des Verifizierungscodes jedes Unterrahmens;

Veranlassen des Sendens eines Blockbestätigungsrahmens, der Informationen aufweist, die eine Anzahl zusätzlicher netzwerkcodierter Blöcke angeben, die für erfolgreiches Decodieren benötigt wird.

9. Vorrichtung nach Anspruch 8, wobei die Mehrzahl von Datenblöcken k MSDU-Blöcke umfasst, wobei der aggregierte Rahmen n Unterrahmen umfasst,

wobei vorzugsweise die Mehrzahl von Datenblöcken eine gleiche Größe aufweist, und

wobei vorzugsweise die Mehrzahl von netzwerkcodierten Blöcken basierend auf einer linearen Kombination der Mehrzahl von Datenblöcken erzeugt wird, und

wobei vorzugsweise die Mehrzahl von netzwerkcodierten Blöcken als Zeilenvektoren $[R_1, R_2, ..., R_n]$ definiert ist, die Mehrzahl von Datenblöcken als Spaltenvektoren $[P_1, P_2, ..., P_k]$ definiert ist und $[R_1, R_2, \cdots, R_n] = [P_1, P_2, ..., P_k]C$, wobei C eine Matrix der Größe k x n ist, die $[C_{ij}]_{kxn}$ Koeffizienten umfasst, die dazu konfiguriert sind, die lineare Kombination durchzuführen, und wobei vorzugsweise die Coderate k/n ist, und

wobei das Kommunikationsnetzwerk vorzugsweise ein drahtloses IEEE 802.11-Netzwerk ist.

**10.** Vorrichtung nach Anspruch 9, wobei die n Unterrahmen des aggregierten Rahmens mindestens eine Teilmenge der Mehrzahl von netzwerkcodierten Blöcken aufweisen,

wobei vorzugsweise der aggregierte Rahmen einen aggregierten MAC-Protokolldateneinheitsrahmen (A-MPDU-Rahmen) umfasst und die n Unterrahmen n A-MPDU-Unterrahmen sind, und
wobei vorzugsweise die n Unterrahmen des aggregierten Rahmens k MSDU-Blöcke und n - k netzwerkcodierte Blöcke umfassen, oder
wobei vorzugsweise die n Unterrahmen des aggregierten Rahmens n netzwerkcodierte Blöcke umfassen.

**11.** Vorrichtung nach Anspruch 10, wobei die Verarbeitungsschaltungsanordnung ferner zu Folgendem konfiguriert ist:
Veranlassen des Abrufens oder Erzeugens der k MSDU-Blöcke aus den n Unterrahmen, wenn s < k, durch Lösen eines Systems linearer Gleichungen, das basierend auf der Mehrzahl von Datenblöcken und den korrekt empfangenen netzwerkcodierten Blöcken erzeugt wird.

**12.** Vorrichtung nach Anspruch 10, wobei es sich bei den Informationen, die auf der Anzahl korrekt empfangener Unterrahmen basieren, um eine Anzahl handelt, die zusätzliche netzwerkcodierte Blöcke angibt, die benötigt werden, um inkorrekt empfangene Unterrahmen wiederherzustellen, und wobei die Verarbeitungsschaltungsanordnung ferner zu Folgendem konfiguriert ist:

Empfangen eines zweiten aggregierten Rahmens, der mindestens die Anzahl zusätzlicher netzwerkcodierter Blöcke aufweist, und
Veranlassen des Wiederherstellens von inkorrekt empfangenen Unterrahmen durch Lösen eines Systems linearer Gleichungen, das basierend auf der Mehrzahl von Datenblöcken und der Mehrzahl von korrekt empfangenen netzwerkcodierten Blöcken erzeugt wird,
wobei vorzugsweise jeder Unterrahmen des zweiten aggregierten Rahmens einen jeweiligen der zusätzlichen netzwerkcodierten Blöcke aufweist.

**13.** Vorrichtung nach Anspruch 11, wobei die Vorrichtung ferner für einen Multilink-Betrieb in einem Drahtloskommunikationsnetzwerk konfiguriert ist, wobei die Verarbeitungsschaltungsanordnung ferner zu Folgendem konfiguriert ist:

Empfangen der Unterrahmen des aggregierten Rahmens über mehrere Links,
wobei das drahtlose Kommunikationsnetzwerk vorzugsweise ein IEEE 802.11-Netzwerk ist.

**14.** Verfahren für eine Vorrichtung, die für Betrieb in einem Kommunikationsnetzwerk konfiguriert ist, wobei das Verfahren Folgendes umfasst:

Empfangen eines aggregierten Rahmens, wobei jeder Unterrahmen des aggregierten Rahmens einen jeweiligen einer Mehrzahl von n netzwerkcodierten Blöcken oder k Datenblöcken aufweist, wobei die Mehrzahl von n netzwerkcodierten Blöcken basierend auf den n Datenblöcken erzeugt wird, wobei k und n ganze Zahlen sind und k > n > 1,
wobei jeder netzwerkcodierte Block eine lineare Kombination der k Datenblöcke ist; und
wobei jeder Unterrahmen des aggregierten Rahmens einen Verifizierungscode aufweist;
Bestimmen von s, der Anzahl korrekt empfangener Unterrahmen, durch Verifizieren des Verifizierungscodes jedes Unterrahmens;
Veranlassen des Sendens eines Blockbestätigungsrahmens, der Informationen aufweist, die eine Anzahl zusätzlicher netzwerkcodierter Blöcke angeben, die für erfolgreiches Decodieren benötigt wird.

**15.** Nichtflüchtiges computerlesbares Medium, das computerausführbare Anweisungen speichert, die bei Ausführung durch einen oder mehrere Prozessoren einer Vorrichtung, die für Betrieb in einem Kommunikationsnetzwerk konfiguriert ist, den einen oder die mehreren Prozessoren der Vorrichtung zum Durchführen des Verfahrens nach Anspruch 14 veranlassen.

**Revendications**

**1.** Dispositif configuré pour fonctionner dans un réseau de communication, le dispositif comprenant des circuits de traitement couplés à une mémoire, les circuits de traitement étant configurés pour :

générer une pluralité de n blocs codés en réseau sur la base d'une pluralité de k blocs de données, où n et k sont des nombres entiers et n > k > 1 et où chaque bloc codé en réseau est une combinaison linéaire de la pluralité des k blocs de données ;

générer une trame agrégée, chaque sous-trame de la trame agrégée comprenant un bloc respectif parmi la pluralité de n blocs codés en réseau ou la pluralité de k blocs de données, où chaque sous-trame de la trame agrégée comprend un code de vérification ;

provoquer l'envoi de la trame agrégée ;

recevoir une trame d'accusé de réception de bloc comprenant des informations indiquant un nombre de blocs codés en réseau supplémentaires nécessaires pour un décodage réussi ; et

provoquer la transmission d'une deuxième trame agrégée comprenant au moins le nombre de blocs codés en réseau supplémentaires.

2.  Dispositif selon la revendication 1, dans lequel la pluralité de blocs de données comprend k blocs MSDU (unité de données de service de contrôle d'accès au support), où la trame agrégée comprend n sous-trames, dans lequel, de préférence, la pluralité de blocs de données sont de taille égale, et

dans lequel, de préférence, la pluralité de blocs codés en réseau sont générés sur la base d'une combinaison linéaire de la pluralité de blocs de données, et

dans lequel, de préférence, la pluralité de blocs codés en réseau sont définis comme des vecteurs de ligne $[R_1, R_2,..., R_n]$, la pluralité de blocs de données sont définis comme des vecteurs de colonne $[P_1, P_2,..., P_k]$, et $[R_1, R_2,..., R_n]$ - $[P_1, P_2,..., P_k]C$ où C est une matrice de taille k x n comprenant $[C_{ij}]_{kxn}$ coefficients configurés pour effectuer la combinaison linéaire, et

dans lequel, de préférence, le taux de codage est k/n, et

dans lequel, de préférence, le réseau de communication est un réseau sans fil IEEE 802.11.

3.  Dispositif selon la revendication 2, dans lequel les n sous-trames de la trame agrégée comprennent au moins un sous-ensemble de la pluralité de blocs codés en réseau,

dans lequel, de préférence, la trame agrégée comprend une trame d'unité de données de protocole MAC agrégée (A-MPDU) et les n sous-trames sont n sous-trames A-MPDU, et dans lequel, de préférence, les n sous-trames de la trame agrégée comprennent k blocs MSDU et n-k blocs codés en réseau, ou

dans lequel, de préférence, les n sous-trames de la trame agrégée comprennent n blocs codés en réseau.

4.  Dispositif selon la revendication 3, dans lequel les circuits de traitement sont en outre configurés pour :

recevoir une trame d'accusé de réception de bloc comprenant des informations indiquant un nombre de blocs codés en réseau supplémentaires ; et

provoquer la transmission d'une deuxième trame agrégée comprenant au moins le nombre de blocs codés en réseau supplémentaires,

dans lequel, de préférence, chaque sous-trame de la deuxième trame agrégée comprend un bloc codé respectif des blocs codés en réseau supplémentaires ; et

dans lequel, de préférence, la trame d'accusé de réception de bloc est un octet, et

dans lequel, de préférence, les blocs codés en réseau supplémentaires sont pré-générés.

5.  Dispositif selon la revendication 4, dans lequel le dispositif est en outre configuré pour un fonctionnement multiliaison dans un réseau de communication sans fil, dans lequel les circuits de traitement sont en outre configurés pour :

provoquer l'envoi des sous-trames de la trame agrégée sur plusieurs liaisons,

dans lequel, de préférence, le réseau de communication sans fil est un réseau sans fil IEEE 802.11.

6.  Procédé pour un dispositif configuré pour fonctionner dans un réseau de communication, le procédé comprenant les étapes suivantes :

générer une pluralité de n blocs codés en réseau sur la base d'une pluralité de k blocs de données, où n et k sont des nombres entiers et n > k > 1 et où chaque bloc codé en réseau est une combinaison linéaire des k blocs de données ;

générer une trame agrégée, chaque sous-trame de la trame agrégée comprenant un bloc respectif parmi la pluralité de n blocs codés en réseau ou la pluralité de k blocs de données, où chaque sous-trame de la trame agrégée comprend un code de vérification ; et
provoquer l'envoi de la trame agrégée, et
le procédé comprenant en outre les étapes suivantes :

recevoir une trame d'accusé de réception de bloc comprenant des informations indiquant un nombre de blocs codés en réseau supplémentaires nécessaires pour un décodage réussi ; et
provoquer la transmission d'une deuxième trame agrégée comprenant au moins le nombre de blocs codés en réseau supplémentaires.

7. Support non transitoire lisible par ordinateur stockant des instructions exécutables par ordinateur qui, lorsqu'elles sont exécutées par un ou plusieurs processeurs d'un dispositif configuré pour fonctionner dans un réseau de communication, amènent les un ou plusieurs processeurs du dispositif à exécuter le procédé selon la revendication 6.

8. Dispositif configuré pour fonctionner dans un réseau de communication, le dispositif comprenant des circuits de traitement couplés à une mémoire, les circuits de traitement étant configurés pour :

recevoir une trame agrégée, chaque sous-trame de la trame agrégée comprenant un bloc respectif parmi une pluralité de n blocs codés en réseau ou une pluralité de k blocs de données, où la pluralité de n blocs codés en réseau est générée sur la base de la pluralité de n blocs de données, où k et n sont des nombres entiers et $k > n > 1$, dans lequel chaque bloc codé en réseau est une combinaison linéaire de la pluralité de blocs de données ; et
dans lequel chaque sous-trame de la trame agrégée comprend un code de vérification ;
déterminer s, le nombre de sous-trames correctement reçues, en vérifiant le code de vérification de chaque sous-trame ; et
provoquer l'envoi d'une trame d'accusé de réception de bloc comprenant des informations indiquant un nombre de blocs codés en réseau supplémentaires nécessaires pour un décodage réussi.

9. Dispositif selon la revendication 8, dans lequel la pluralité de blocs de données comprend k blocs MSDU, où la trame agrégée comprend n sous-trames,

dans lequel, de préférence, la pluralité de blocs de données sont de taille égale, et
dans lequel, de préférence, la pluralité de blocs codés en réseau sont générés sur la base d'une combinaison linéaire de la pluralité de blocs de données, et
dans lequel, de préférence, la pluralité de blocs codés en réseau sont définis comme des vecteurs de ligne $[R_1, R_2, ..., R_n]$, la pluralité de blocs de données sont définis comme des vecteurs de colonne $[P_1, P_2, ..., P_k]$ et $[R_1, R_2, ..., R_n] = [P_1, P_2, ..., P_k]C$ où C est une matrice de taille k x n comprenant $[C_{ij}]_{kxn}$ coefficients configurés pour effectuer la combinaison linéaire, et dans lequel, de préférence, le taux de codage est k/n, et
dans lequel, de préférence, le réseau de communication est un réseau sans fil IEEE 802.11.

10. Dispositif selon la revendication 9, dans lequel les n sous-trames de la trame agrégée comprennent au moins un sous-ensemble de la pluralité de blocs codés en réseau,

dans lequel, de préférence, la trame agrégée comprend une trame d'unité de données de protocole MAC agrégée (A-MPDU) et les n sous-trames sont n sous-trames A-MPDU, et dans lequel, de préférence, les n sous-trames de la trame agrégée comprennent k blocs MSDU et n-k blocs codés en réseau, ou
dans lequel, de préférence, les n sous-trames de la trame agrégée comprennent n blocs codés en réseau.

11. Dispositif selon la revendication 10, les circuits de traitement étant en outre configurés pour :
provoquer l'obtention ou la génération des k blocs MSDU à partir des n sous-trames lorsque $s < k$ en résolvant un système d'équations linéaires généré sur la base de la pluralité de blocs de données et des blocs codés en réseau correctement reçus.

12. Dispositif selon la revendication 10, dans lequel les informations basées sur le nombre de sous-trames correctement reçues sont un nombre indiquant des blocs codés en réseau supplémentaires nécessaires pour récupérer des sous-trames incorrectement reçues, et dans lequel les circuits de traitement sont en outre configurés pour :

recevoir une deuxième trame agrégée comprenant au moins le nombre de blocs codés en réseau supplémentaires, et
provoquer la récupération des sous-trames incorrectement reçues en résolvant un système d'équations linéaires généré sur la base de la pluralité de blocs de données et de la pluralité de blocs codés en réseau correctement reçus,

dans lequel, de préférence, chaque sous-trame de la deuxième trame agrégée comprend un bloc codé en réseau supplémentaire respectif.

13. Dispositif selon la revendication 11, dans lequel le dispositif est en outre configuré pour un fonctionnement multiliaison dans un réseau de communication sans fil, dans lequel les circuits de traitement sont en outre configurés pour :

recevoir les sous-trames de la trame agrégée sur plusieurs liaisons,

dans lequel, de préférence, le réseau de communication sans fil est un réseau IEEE 802.11.

14. Procédé pour un dispositif configuré pour fonctionner dans un réseau de communication, le procédé comprenant les étapes suivantes :

recevoir une trame agrégée, chaque sous-trame de la trame agrégée comprenant un bloc respectif parmi une pluralité de n blocs codés en réseau ou de k blocs de données, où la pluralité de n blocs codés en réseau est générée sur la base des n blocs de données, où k et n sont des nombres entiers et k > n > 1,
dans lequel chaque bloc codé en réseau est une combinaison linéaire des k blocs de données ; et
dans lequel chaque sous-trame de la trame agrégée comprend un code de vérification ;
déterminer s, le nombre de sous-trames correctement reçues, en vérifiant le code de vérification de chaque sous-trame ; et
provoquer l'envoi d'une trame d'accusé de réception de bloc comprenant des informations indiquant un nombre de blocs codés en réseau supplémentaires nécessaires pour un décodage réussi.

15. Support non transitoire lisible par ordinateur stockant des instructions exécutables par ordinateur qui, lorsqu'elles sont exécutées par un ou plusieurs processeurs d'un dispositif configuré pour fonctionner dans un réseau de communication, amènent les un ou plusieurs processeurs du dispositif à exécuter le procédé selon la revendication 14.

FIG. 1

```
                                                      200

┌─────────────────────────────────────────────┐
│  utilize a network coding technique for       │ ⌐ 202
│  retransmission of a packet                   │
└─────────────────────────────────────────────┘
                       │
                       │
                       ▼
┌─────────────────────────────────────────────┐
│  generate an aggregated frame on a first link │ ⌐ 204
│  of a plurality of links                      │
└─────────────────────────────────────────────┘
```

FIG. 2

300

301

310

TRANSCEIVER

302

COMMUNICATIONS CIRCUITRY

MEMORY 308

306

PROCESSING CIRCUITRY

FIG. 3

EP 4 195 547 B1

400

| | |
|---|---|
| HARDWARE PROCESSOR — 402 / INSTRUCTIONS — 424 | GRAPHICS DISPLAY DEVICE — 410 |
| MAIN MEMORY — 404 / INSTRUCTIONS — 424 | ALPHANUMERIC INPUT DEVICE — 412 |
| STATIC MEMORY — 406 / INSTRUCTIONS — 424 | UI NAVIGATION DEVICE — 414 |
| SENSORS — 428 | STORAGE DEVICE — 416 / MACHINE-READABLE MEDIUM — 422 / INSTRUCTIONS — 424 |
| NETWORK INTERFACE DEVICE/ TRANSCEIVER — 420 | SIGNAL GENERATION DEVICE — 418 |
| ANTENNA(S) — 430 | WI-FI WITH NETWORK CODING DEVICE — 419 |
| | POWER MANAGEMENT DEVICE — 432 |
| COMMUNICATIONS NETWORK — 426 | OUTPUT CONTROLLER — 434 |

408

FIG. 4

FIG. 5

FIG. 6

FIG. 7

FIG. 8

901a          901b              903

TX          [D1]         [D1]              [D1]
RX                                              [BA]

          ◄——————►    ◄——————►
           Channel       Channel
           Access        Access                905
           Delay         Delay

            902a          902b

FIG. 9

911

TX     [D1][D1][D1][D1][D1][D1]
RX                              [BA]
PER = 0.1

                                 915

FIG. 10

Input packets 1101      P1   P2

TX

        ↓ Linear combination

Encoded packets 1103    R1   R2   R3   R4

         Lossy transmission

        ↓ (prob. e)

Received packets 1105    R1   R2   R3   R4

RX

        ↓ Decode (solve linear equation)

Output packets 1107     P1   P2

# FIG. 11

1200

Systematic Network Code

FIG. 12

TX (e.g., AP)

| 1 | 2 | 3 | 4 | 5 |

1301: Linear combination code
A-MPDU with k=5 subframes encode to A-MPDU with n=10 subframes
Network Coding of k/n = 0.5

| en1 | en2 | en3 | en4 | en5 | en6 | en7 | en8 | en9 | en10 |

1303: Lossy transmission
PER = 0.1

RX (e.g., STA)

| en1 | en2 | en3 | en4 | | en6 | en7 | | en9 | en10 | Ack |

1305: Shorter BA acknowledgement
Receive encoded subframes and send Ack based on correctly received encoded subframes
Ack may just indicate the additional number of network coded subframes needed for successful decoding of A-MPDU

1307: Decode (solve linear equation) based on the correctly received network coded subframes

| 1 | 2 | 3 | 4 | 5 |

Even with transmission errors, the original A-MPDU can be recovered. No need for retransmission of additional subframes, if at least k subframes are received correctly.

Decoding failure probability improved from 0.1 to $10^{-4}$

FIG. 13

FIG. 14A

| 1 | 2 |

Link 1

K=2      PER = 0.1
K=5      PER = 0.1
K=10     PER = 0.1

FIG. 14B

| 1 | 2 |

Link 1

K=2      PER = $(0.1)^2$
K=5      PER = $(0.1)^2$
K=10     PER = $(0.1)^2$

| 1 | 2 |

Link 2

FIG. 14C

| 1 | 2 |

Link 1

K=2      PER = $3\times(0.1)^3$
K=5      PER = $9\times(0.1)^5$
K=10     PER = $4\times(0.1)^7$

| en1 | en2 |

Link 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2011071472 A1